# EUROPEAN PATENT APPLICATION

(11) **EP 3 960 531 A1**
(43) Date of publication of application: **02.03.2022**
(21) Application number: 20212787.4
(22) Date of filing: 09.12.2020
(51) Int. Cl.: B60L 53/66, B60L 53/68, G06K 19/07, G06Q 20/14, G06Q 20/32, G06Q 20/40, G06Q 50/06

(54) **A SYSTEM FOR PROCESSING A CHARGING FEE OF AN ELECTRIC VEHICLE WITH A MOBILE DEVICE AND A METHOD FOR UTILIZING A CHARGING DATA WITH THE SAME**

(30) Priority: 27.08.2020 KR 20200108664
(71) Applicant: ecarPlug Co., Ltd., Jungwon-gu Seongnam-si, Gyeonggi-do (KR)
(72) Inventor: SHIN, Kwang Seob, Gwangju-si (KR); BAEK, Byung San, Hwaseong-si (KR); AHN, Hong Sang, 61476 Kronberg (DE)
(74) Representative: Banse & Steglich Patentanwälte PartmbB

(57) **Abstract**

The present invention relates to a system for processing a charging fee of an electric vehicle with a mobile device and a method for utilizing a charging data with the same. A system for processing a charging fee with a mobile device, comprising; a paying application 20 installed at the mobile device capable of obtaining a charging information of an electric vehicle; and a managing server 13 to be accessed via a wireless communication using the mobile device, wherein the paying application 20 can communicate with a charging device 12 via a near filed communicating means installed at the mobile device 11, and the managing server 13 stores a data related to a location information for charging an electric vehicle and a kind of the electric vehicle.

## Description

### BACKGROUND OF THE INVENTION

### 1. Field of the Invention

The present invention relates to a system for processing a charging fee of an electric vehicle with a mobile device and a method for utilizing a charging data with the same, in particular the system for processing the charging fee with a near field communication between the mobile device and a charging device and a method for utilizing the charging data with the same.

### 2. Description of the Related Art

The electric vehicle comprising a battery, a motor, an inverter or a battery managing system BMS has been recently in an expansion of spread state, and a demand for building a proper charging infrastructure to charge the electric vehicle gets larger eventually as the amount of the electric vehicle increases rapidly. The infrastructure may comprise a supplying network for supplying an electric power, a system for processing a charging fee, a system for operating a power line or a battery exchanging station. Many various standards for charging the electric vehicle are made, and an electric vehicle charge and a fee payment according to charging the electric vehicle may be performed according to each standard. The charging fee may be determined in various ways according to a kind of charging station, a kind of electric vehicle or a kind of policy related to the electric vehicle. Therefore, it is necessary for a consumer to be provided with a proper charging way according to the kind of electric vehicle or a registration condition of the electric vehicle, and an efficient policy for the charging fee is demanded according to the charging way. As a technology of a mobile device advances rapidly, the charging fee can be paid conveniently with a mobile device. Furthermore, a charging data related to the charging way may be accumulated for making a proper policy for the charging fee. The Korean patent publication no. 10-2012-0113139 discloses an unmanned selling system of power for charging car and a method thereof. And the Korean patent registration no. 10-1654714 discloses an electric vehicle bi-directional charging management system and a method using a smart phone. And the Korean patent registration no. 10-1828593 discloses a charging system for a mobile charger for an electric vehicle using a user portable terminal. But the known inventions don't disclose a method to provide information related to the charging fee to the consumer, or to collect various charging data. Therefore, the present invention for overcoming problems of the known inventions has a purpose below

### PURPOSE OF THE INVENTION

A purpose of the present invention is to provide with a system for processing a charging fee of an electric vehicle with a mobile device and a method for utilizing a charging data with the same, wherein the mobile device communicates with a charging device via a near filed communication to pay the charging fee of the electric vehicle in a proper way according to a kind of electric vehicle, and various data related to a charging way may be collected to utilize for making a policy related to the electric vehicle.

### SUMMARY OF THE INVENTION

According to one embodiment of the present invention, a system for processing a charging fee with a mobile device comprises a paying application installed at the mobile device capable of obtaining a charging information of an electric vehicle; and a managing server 13 to be accessed via a wireless communication using the mobile device, wherein the paying application can communicate with a charging device via a near filed communicating means installed at the mobile device, and the managing server stores a data related to a location information for charging an electric vehicle and a kind of the electric vehicle.

According to other embodiment of the present invention, the charging device comprises a portable charger for making an electric connection between a power supplying means for supplying from an electric power source and the electric vehicle, and the power supplying means has a unique identification code identified with the mobile device or the charging device.

According to another embodiment of the present invention, the system further comprises a fee paying server, the charging information comprises a charging location and a charging station, a charging information data is generated by the paying application according to the charging location and the charging station to transmit to the managing server, and the fee paying server determines each portion of the charging fee according to the charging information data.

According to still another embodiment of the present invention, the managing server 13 comprises a charging/running information database 66 for storing a data related to a charging information or a running information of each electric vehicle, at a least of a portion of the data stored in the charging/running information database 66 can be provided to a data utilizing server under a condition of paying at a least of a portion of the total charging fee.

According to still another embodiment of the present invention, a method for utilizing a charging information comprises storing a charging location or a charging station for an electric vehicle in a managing server; detecting the electric vehicle to charging at the location or the station by an paying application installed at a mobile device, and delivering an information related to a charging state to the managing server using the mobile device; verifying the information in the managing server; verifying whether at least a portion of a charging fee is to be paid by a predetermined paying server; detecting a charging completion, and generating a charging information data; transmitting the charging information data to the predetermined paying server and a server to utilize the charging information; and determining each paying portion of the paying server and the server to utilize the charging information.

### BRIEF DESCRIPTION OF THE DRAWINGS

FIG. 1 shows an embodiment of a system for processing a charging fee of an electric vehicle with a mobile device according to the present invention.
FIG.2 shows other embodiment of the system for processing the charging fee according to the present invention.
FIG.3 shows another embodiment of the system for processing the charging fee according to the present invention.
FIG.4 shows an embodiment of a process for paying the charging fee according to the system of the present invention.
FIG.5 shows an embodiment of utilizing a charging information according to the present invention.
FIG.6 shows an embodiment of controlling a charging process using the paying application according to the present invention.
FIG.7 shows an embodiment of a method for processing the charging fee of an electric vehicle with a mobile device and utilizing a data related to a charging information.

### DETAILED DESCRIPTION OF EXEMPLARY EMBODIMENTS

Exemplary embodiments of the present invention will be described herein below with reference to the accompanying drawings.

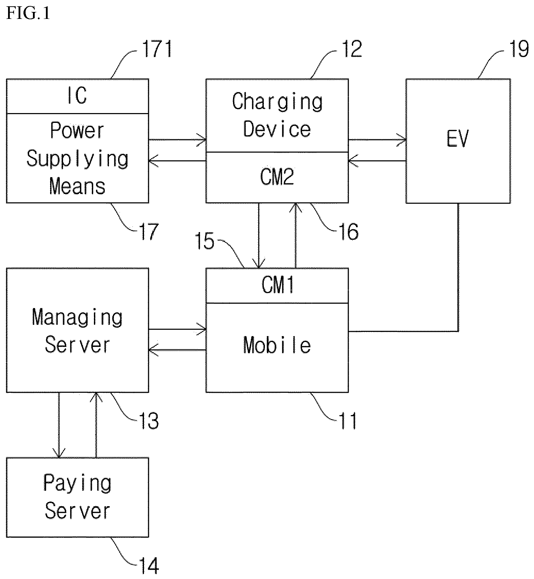

FIG.1 shows an embodiment of a system for processing a charging fee of an electric vehicle with a mobile device according to the present invention.

Referring to FIG.1, a system for processing a charging fee with a mobile device comprises a paying application 20 installed at the mobile device capable of obtaining a charging information of an electric vehicle; and a managing server 13 to be accessed via a wireless communication using the mobile device, wherein the paying application 20 can communicate with a charging device 12 via a near filed communicating means installed at the mobile device 11, and the managing server 13 stores a data related to a location information for charging the electric vehicle and a kind of the electric vehicle.

The mobile device 11 may be various portable electric device to be available for a near field communication or a telecommunication with a Wi-Fi communication or a blue tooth communication, for example, the mobile device 11 may be a smart phone. And also, the mobile device 11 may be used for accessing to the internet, and for a distance communication. The charging device 12 may be various charger for charging the electric vehicle 19 such as a quick charger, a slow charger, a portable charger or the like, and the charging device 12 may be connected to a power supplying means 17 such as a power socket or a power supplying tab for charging the electric vehicle 19. For example, the charging device 12 may be the power supplying means 17 that may be equipped at a facility for a public use such as an assembly building or a public building. And also, the charging device 12 may be the power supplying tab that has a power socket structure and can be connected to a power supplying source. A communication chip 16 for the near field communication may be installed at the charging device 12, for example, a communication chip for the blue tooth communication may be installed for communicating with a communicating means 15 equipped at the mobile device 11 for the blue tooth communication.

The blue tooth connection between the charging device 12 and the mobile device 11 may be established, when the charging device 12 is connected. The electric vehicle 19 is charged through the power supplying means 17, and then the charging fee has to be paid. If the power supplying means 17 is not a dedicated one that is installed at a dedicated equipment for the electric vehicle, the charging fee may be charged to one related to an integrated power meter measuring a power amount. Therefore, if a user of the charging device 12 is not one responsible for paying a fee related to the integrated power meter, then the charging fee for charging the electric vehicle 19 has to be estimated about the electric vehicle independently, and the charging fee may be paid independently. For the separate payment, the charging device 12 and the electric vehicle 11 connected to the power supplying means 17 have to be identified, the paying way has to be determined, and the charging process has to be authorized. And then, the charging can be initiated. For processing the charging fee in case of charging the electric vehicle through the not-dedicated power supplying means 17, the charging authorization may be obtained using the mobile device 11. For example, a unique identification code 171 can be transmitted from the charging device 12 to the mobile device 11, when the charging device 12 is connected to the power supplying means 17. And then, the mobile device 11 can transmit the code 171 to the managing server 13, and the managing server 13 may vouch the charging fee through a communication with a paying server 14 or may pay the charging fee directly. And, the payment authorization can be transmitted to the power supplying means 17 through the mobile device 11 for starting the charging process. The payment guarantee or payment authorization may be transmitted to an agency managing a power supplying fee for informing that the fee for charging the electric vehicle may be paid independently in a proper time.

The unique identification code 171 may be a quick response code, a unique identification number or the like, and may be attached on the power supplying means 17. The code 171 can be recognized by a camera or other means installed at the mobile device 11 to be transmitted to the agency through the managing server 13 for obtaining the charging authorization, or for later payment. On the other hand, an authorizing code may be delivered to the charging device 12, when the charging device 12 is connected to the power supplying means 17, and then the authorizing code can be transmitted to the mobile device 11 through the near field communication such as the blue tooth communication. And the authorizing code may be transmitted to the managing server 13 through the telecommunication for obtaining a charging authorization. And then, the managing server 13 may pay the charging fee through the paying server 14 in a suitable time, and the result of the payment may be delivered to the agency managing the power supplying means 17 for calculating.

The managing server 13 can store each information related each power supplying means 17 that is located at various places. And the managing server 13 can verify each power supplying means 17 using the unique identification code 171. When the managing server 13 receives an identification code 171 from the mobile device 11, the managing server 13 may search the received code 171 in the database to determine whether the charging process can be authorized or not. And if the authorization response is transmitted to the charging device 12 or the power supplying means 17 through the mobile device 11, then the electric vehicle 19 can be charged by the power supplying means 17. A charging process may be monitored, for example, by the paying application described below. A charging monitoring process by the paying application 20 may be explained below in a dedicated charging facility such as a charging station for the electric vehicle. The monitoring process or a process similar to that by the paying application 20 can be applied to the charging process using the power supplying means 17 described in FIG. 1.

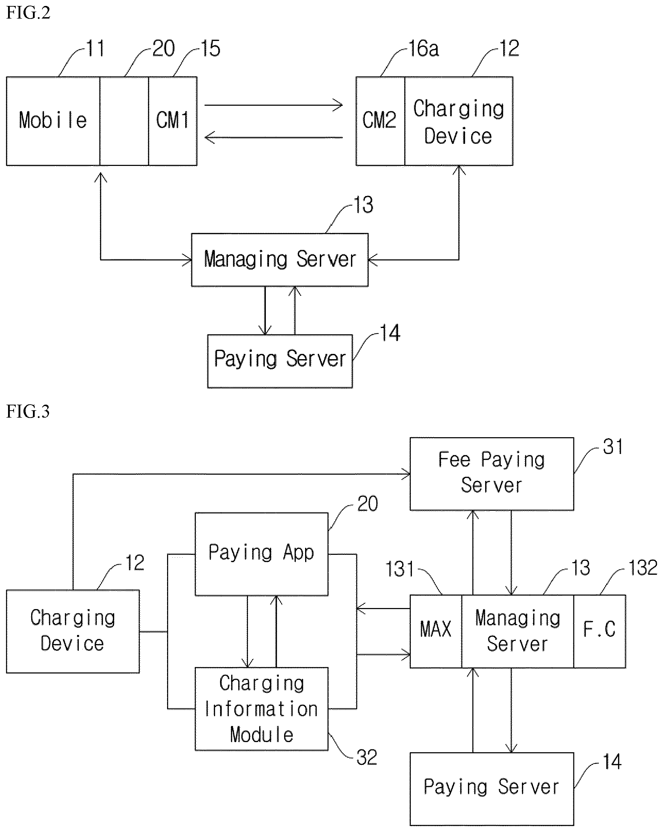

FIG.2 shows other embodiment of the system for processing the charging fee according to the present invention.

Referring to FIG. 2, the paying application 20 may be installed in the mobile device 11 for monitoring a charging process or a power supplying process, and various information obtained in course of charging may be provided to the user. The charging device 12 may comprise many means for charging various electric vehicles, and the charging device 12 may be connected to a power supply network to supply power to a battery of the electric vehicle.

The charging device 12 may be displaced at a dedicated charging station, at a parking area, a common facility, or at a house. The communicating means 16 capable of communicating in a near field way such as the blue tooth communication may be installed at the charging device 12, and the communicating means 16 can communicate with the communicating chip 15 installed at the mobile device, for example, the communicating means 16 can communicate with the communicating chip 15 via the Wi fi communication or the blue tooth communication. The paying application 20 may be downloaded at the mobile device from the managing server 13. The managing server 13 may store information related to the mobile device 11, the registered electric vehicle, the user of the electric vehicle and the like to utilize in course of charging and paying process. And the managing server 13 may store information related various charging devices 12 displaced at different places, and the charging device information may be updated to provide to the paying application 20. And also, the managing server 13 may provide a detailed information, if necessary or requested, to the paying application 20. And the managing server 13 can communicate with the paying server 14 such a bank, a card company, an electric power company or the like for processing the charging fee. The managing server 13 may obtain a payment approval from the paying server 14 before or after charging to provide to the mobile device 11 or the charging device 12. And also, the managing server 13 may process the charging payment according to the charging condition to deliver the result of the payment to each paying application 20 installed at each mobile device 11 in a proper time or periodically. The managing server 13 may have various function to process the payment of the charging fee, not limited to.

FIG.3 shows another embodiment of the system for processing the charging fee according to the present invention.

Referring to FIG.3, the system for processing the charging fee may comprise the paying application 20 installed at the mobile device to obtain a charging information of the electric vehicle; and the managing server 13 to determine a paying way of the charging fee based on the charging information transmitted from the paying application 20. And the managing server 13 may store an information related to a charging place or a kind of the electric vehicle to provide the information to the paying server 14 to pay at least a portion of the charging fee according to the charging way. The paying application 20 may be installed at a smart phone to detect the charging place, a charging initiation, a charging process or a power supplying process, and the charging process may be selectively monitored by the paying application 20. A charging information module 32 may be installed according to the kind of electric vehicle or a registration condition of the electric vehicle. The charging information module 32, for example, may become an OBD (On Board Diagnostics) terminal, BMS (Battery Managing System), an electric chip or board installed at the electric vehicle connected to an information collecting module of the electric vehicle. The charging information module 32 may comprise a controlling unit, memory and a near field communicating means, and can be connected to the paying application 20 via the blue tooth communication. A charging processing information of the electric vehicle may be obtained by the charging information module 32 to transmit to the paying application 20. The charging device 12 may comprise various means for charging the electric vehicle, and connected to a power supplying network to supply a battery of the electric vehicle. The charging device 12 may be classified according to a kind of the charging station, a location, required time for charging or a way of paying the charging fee. For example, the charging device 12 may be divided into two groups, that is, one group installed at a house, an apartment or an assembly building and the other group installed at a charging station corresponding to a dedicated facility for charging the electric vehicle. And also, the charging device 12 may be classified according to a policy applied to different electric vehicles. The classifying information of each charging device 12 may be stored at the managing server 13, and the classifying information may be delivered to the paying application 20 for storing. A near field communicating means may be installed at the charging device 12 for communicating with a communicating chip installed at the mobile device via the Wi Fi communication, the blue tooth communication or the like. The paying application 20 may obtain an information related to the charging device 12 such as a kind of the charging device 12, a charging condition information or the like through the near field communication. And also, the paying application 20 may obtain a charging location information, a charging time information or an amount of supplied power from the charging information module 32 or other device equipped in the electric vehicle. And the information related to the charging condition may be transmitted to the managing server 13. The managing server 13 may have an information of the mobile device relevant to the electric vehicle, and have the electric vehicle information, the user information of the electric vehicle and the like through registration by the user. The managing server 13 may store various charging devices 12 installed at various different places, and can update a present state of each charging device 12 for providing to each paying application 20. And also, the managing server 13 may be connected to the paying server 14 such as the bank, the card company, the power supplying company or the like. The managing server 13 can obtain the payment approval of the charging fee from the paying server 14 to transmit to the mobile device or the charging device 12. And also, the managing server 13 may have various means for processing the charging fee and the payment of the charging fee, not limited to. The managing server 13 may judge the paying method applied to the electric vehicle policy based on the charging information. For example, the managing server 13 may have an information to apply to the electric vehicle, and the information may comprise a support policy or a reduction policy according to the kind of electric vehicle. And also, the managing server 13 may comprise a fee calculating module 131 to calculate the charging fee automatically according to a charging way or the kind of the electric vehicle. And the fee calculating module 132 can search if there is the fee support policy, if at least a portion of the fee is paid by an electric vehicle company, or if the electric is registered in name of a corporation in course of calculating the fee. Then the fee calculating module 132 may determine at least one payer. The managing server 13 can deliver the charging information and the fee information to each server 31 responsible for the payment. And then, the charging fee can be paid or at least a portion of the charging fee may be deducted. The managing server 13 may deliver the charging and fee information to the paying server 14 for being paid by the fee paying server 31. Selectively, the charging and fee information may be transmitted from the charging device 12 to the fee paying server 31 directly, and the fee paying server 31 may check the information from the managing server 13 and the information from the charging device to pay the charging fee.

According to one embodiment of the present invention, an optimal fee selecting module 131 may be installed at the managing server 13, and the selecting module 131 can provide an optimal or profitable charging information to the user based on a running information of the electric vehicle and a charging information of the electric vehicle. For example, the selecting module 131 may analyze a running characteristics of the electric vehicle to determine a battery charging condition, a charging time, a charging station or a charging location for a minimum charging fee, and the analyzed information may be delivered to the paying application 20 in an alarm form. And the user may charge the electric vehicle based on the charging alarm or may make a charging schedule. The paying application 20 may have various function to provide a profitable information to the user, not limited to.

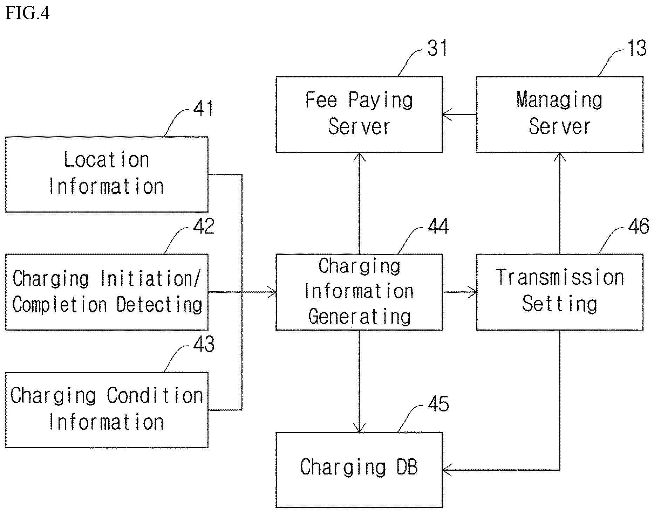

FIG.4 shows an embodiment of a process for paying a charging fee according to the system of the present invention.

Referring to FIG.4, the charging information may comprise a charging location information and a charging station information, and a charging information data may be generated based on the location and the station information by the paying application to deliver to the managing server 13. The fee paying server 31 may determine each portion of the charging fee based on the charging information data. The paying application may be a smart phone of a user, and one electric vehicle may be related to at least one paying application. The paying application may have a function of providing the charging information and the fee information, and selectively have a function to monitor a charging process. And also, the paying application may pay the charging fee, and may provide a charging information related to a fee support policy or a deduction information of the home charging. The paying application may comprise a location information unit 41 to detect a location information of the electric vehicle, in particular to detect a charging location of the electric vehicle. And also, the paying application may comprise a charging initiating/finishing detection unit42 to detect a charging initiation time or a charging completion time, and a total time for charging. And also, the paying application may comprise a charging condition information unit 43 to detect a charging amount, a time for charging, a period required for charging again, and an estimating time for charging next. And an information detected by the location information unit 41, the charging initiating/finishing detection unit 42 and the charging condition information unit 43 may be delivered to a charging information generating unit 44. The charging information generating unit 44 may produce a charging data to store in a charging database 45. The charging database 45 may store a charging information related to each electric vehicle, for example, the database 45 may store a base information for calculating the optimal charging information of each electric vehicle described above. The charging data may be delivered to the fee paying server 31, and the paying application may judge the fee support policy to apply to the charging fee, and then the paying application may determine whether the charging data is delivered or not. It is determined previously whether the fee support policy is applied or not, and the policy information may be stored in the paying application by delivery of the managing server 13. The charging date is generated by the charging information generating unit to deliver to a transmission setting unit 46, and the setting unit 46 transmit the charging date to the paying server 13 based on a predetermined condition. The managing server 13 may check the transmitted charging data to store in the charging database, and deliver the charging data to the fee paying server 31. The paying application may pay the charging fee through communicating with a paying server before charging, and may comprise various means to obtain an information related to charging or running state, not limited to.

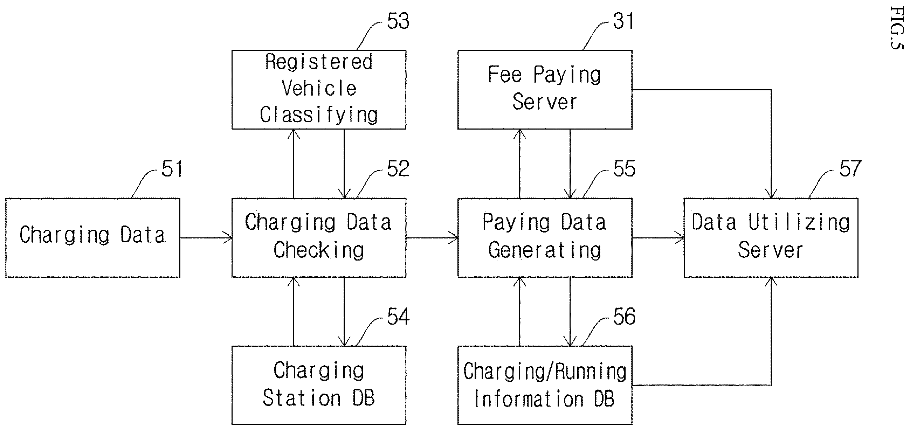

FIG.5 shows an embodiment of utilizing a charging information according to the present invention.

Referring to FIG.5, the managing server may comprise a charging/running information database 56 for storing a charging information or a running information related to each electric vehicle. At least a portion of information stored in the information database 56 may be provided to a data utilizing server 57 under a condition of paying at least of a portion of the charging fee. If a charging data 51 produced by the paying application may be delivered to the managing server, then the managing server may determine a paying way of the charging fee or the managing server may determine a way to utilize the charging data 51. A charging data checking unit 52 may be installed at the managing server to check whether the electric vehicle related to the charging data 51 corresponds to a legal one for a charging fee support policy referring to an information stored in a charging station database 54 and a registered vehicle classifying unit 53 If the electric vehicle corresponds to a legal one, a paying data may be produced by a paying data producing unit 55. The paying data may comprise a kind of deduction according to the support policy, a deducted amount or an organization to support a charging fee. If paying data is produced, then the paying data together the running information may be transmitted to the charging/running information database 56 for storing. And also, the paying data may be delivered to the fee paying server 31 for paying the charging fee. And also, the paying data may be transmitted to the data utilizing server 57. The data utilizing server 57 may be various kind of servers belonging to a company selling various kind of electric vehicle, a company running a charging station for the electric vehicle, an electric power company or the like related to a production, a sale, an electric power provision, a service provision for the electric vehicle. The data utilizing server 57 may be a big data server storing various information related to various kind of electric vehicles, but not limited to. The data utilizing server 57 may establish a sale policy for the electric vehicle, a support policy for the charging fee or a plan for various kinds of charging stations. And the data utilizing server 57 may perform an research or development of the electric vehicle. The managing server may provide at least a portion of the paying data to the data utilizing server under the condition of paying at least a portion of the charging fee. The paying data may be transmitted to the fee paying server 31, and the fee paying server 31 may hand the charging data to the data utilizing server 57 under the condition of paying at least a portion of the charging fee. The running information and charging information are obtained by the managing server 31, and then the information can be utilized by the data utilizing server 57 under the condition of paying at least a portion of the charging fee. A cost for maintaining the electric vehicle may be reduced and a proper policy for the electric vehicle may be established by using the charging data as above mentioned method. The managing server 31 may process the charging information in various ways to provide various organizations according to a legal procedure, not limited to.

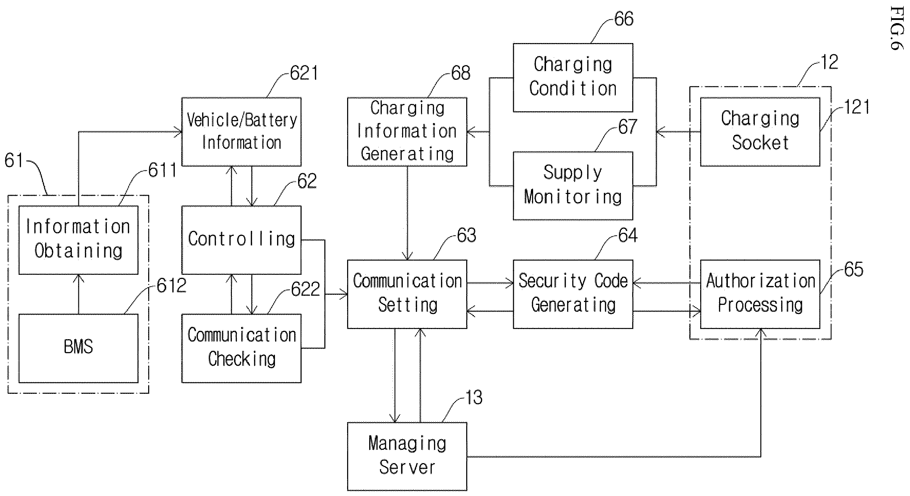

FIG.6 shows an embodiment of controlling a charging process using the paying application according to the present invention.

Referring to FIG.6, the paying application may comprise a charging state unit 66 for storing an information about a charging state; and a charging information generating unit 68 for generating a charging information data to transmit to the managing server 13 based on an information delivered from a supply monitoring unit 67 for monitoring a supplying state of a electric power. And also, the paying application may further comprise a security code generating unit 64 for encrypting at least a portion of data made in course of communicating with the charging device 12. An electric vehicle 61 may comprise a battery managing system 612 for managing batteries equipped at the electric vehicle 61. An information obtaining unit 611 may be installed at the electric vehicle 61 for obtaining a condition information of the batteries. The information obtaining unit can be connected to a mobile device for a wireless communication, for example, a blue tooth communication. The information obtaining unit 611 can obtain various information generated in course of running from BMS 612 and other operating devices equipped at the electric vehicle to transmit to a vehicle/battery information unit 621 installed at the paying application. The charging information unit 611 can transmit the vehicle condition information or the battery condition information to the charging/battery information unit 621 periodically or in necessity via the blue tooth communication. If the battery needs to be charged, then the vehicle/battery information unit 621 may transmit the information to controlling unit 62 for raising an alarm. The controlling unit 62 may comprise a communication checking unit 622 for setting a blue tooth communication with the charging device 12. If a blue tooth device is found by the communication checking unit 622, then the blue tooth communicating chip in the mobile device can be made in pairing state with the blue tooth device at the charging device by a communicating setting unit 63. And the mobile device can communicate with the managing server in wireless communication.

For example, an authorization code may be transmitted to the managing server 13, and the authorization code can be handed to an authorization processing unit 65 through the communication setting unit 63. Selectively, the authorization cods can be transmitted to the authorization processing unit 66 at the charging device 12 for comparing with that transmitted to the mobile device. A charging socket 121 may be connected to an inlet for a charging initiation, and a charging condition unit 66 may check a total charging amount or a time required for charging to store in a memory. And also, the charging condition unit 66 may verify whether a supplying power is the same as a charging power, the charging socket 121 is connected to the inlet in suitable way or a predetermined power is supplied. And the checking or verified information by the charging condition unit 66 and a supply monitoring unit 67 may be transmitted to the charging information generating unit 68, and the charging information generating unit 68 may produce the charging data to store in a charging database. The charging data may be transmitted to the managing server 13 to compare the charged power with the predetermined suppling power to store in the charging database. The security code generating unit 64 may encrypt the information communicating between the charging device and the mobile device. The encrypted information may be decrypted using a security decrypting information transmitted from the managing server 13 to the charging device 12 for protecting the information. The security code generating unit 64 can delete an information that is required in course of charging, but is unnecessary for the charging device to store after charging completion. The paying application may have various protecting means for protecting information related to the electric vehicle or the user, not limited to.

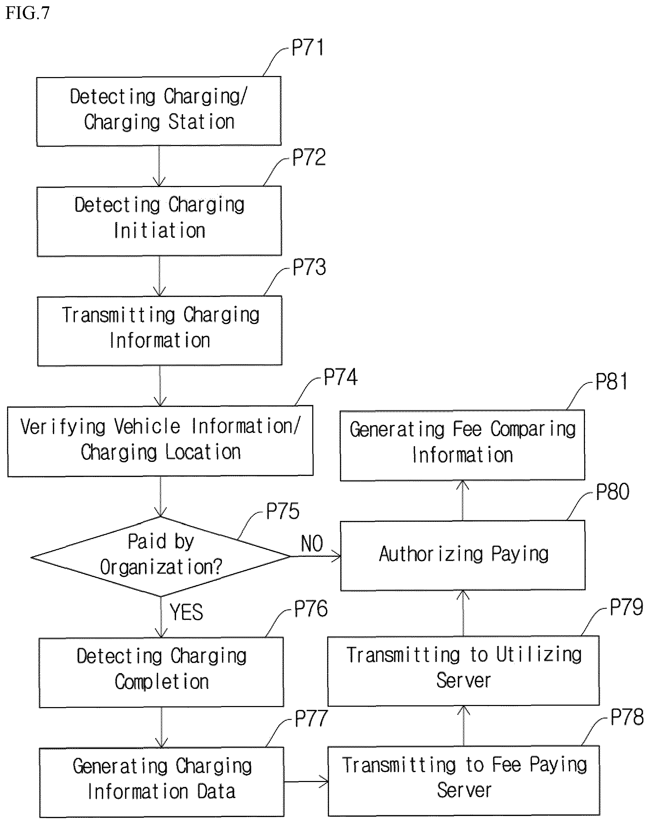

FIG.7 shows an embodiment of a method for processing a charging fee of an electric vehicle with a mobile device and utilizing a data related to a charging information.

Referring to FIG.7, A method for utilizing a charging information comprises storing a charging location or a charging station for an electric vehicle in a managing server P71; detecting the electric vehicle to charging at the location or the station by an paying application installed at a mobile device, and delivering an information related to a charging state to the managing server using the mobile device P72; verifying the information in the managing server P74;verifying whether at least a portion of a charging fee is to be paid by a predetermined paying server P75; detecting a charging completion, and generating a charging information data P77; transmitting the charging information data to the predetermined paying server and a server to utilize the charging information P78; and determining each paying portion of the paying server and the server to utilize the charging information P81.

The charging information of the electric vehicle may be obtained by the paying application installed at the mobile device such as a smart phone as described above to transmit to the managing server P71. Selectively, the charging information may be transmitted to the managing server by the charging device through a suitable communicating means. The charging information may comprise at least a charging location and the charging station information. A charging condition may be detected by the paying application, and the detected information may be transmitted to the managing server, and a charging initiation information may be stored in the paying application P72. A payment of the charging fee may be performed by the managing server, or the charging authorization may be made by the managing server depending on a kind of the charging device. The charging information may be detected by the paying application to transmit to the managing server P73, and the managing server can verify the electric vehicle information and the charging location information P74. The managing server can check whether the charging fee is paid by a predetermined way or whether there is a fee support policy P75. If the charging fee is paid directly by the user in the spot NO, the authorizing process can be advanced by the managing server P80. If the charging fee is paid by a cooperation, an owner of the electric vehicle or a third party YES, then the completion may be detected by the paying application and be stored in the paying application, and a charging data may be generated by the paying application or the managing server P77. And the charging data may be transmitted to the fee paying server P78, and selectively to be transmitted to the data utilizing server P79. And then, an authorization to the charging fee may be maid according to the policy or a predetermined one related to the utilizing server P80. The paying authorization may be various ways according to the fee support policy, and an information that the support policy effects to an expansion spread of the electric vehicle may be made using the charging data. The charging data can be utilized in various ways according to a kind of the charging station or a kind of the electric vehicle, not limited to.

While the present invention has been particularly shown and described with reference to exemplary embodiments thereof, it will be understood by those skilled in the art that various changes in form and details may be made therein without departing from the spirit and scope of the present invention as defined by the appended claims.

## Claims

1. A system for processing a charging fee with a mobile device, comprising;
a paying application 20 installed at the mobile device capable of obtaining a charging information of an electric vehicle; and
a managing server 13 to be accessed via a wireless communication using the mobile device,
wherein the paying application 20 can communicate with a charging device 12 via a near filed communicating means installed at the mobile device 11, and the managing server 13 stores a data related to a location information for charging an electric vehicle and a kind of the electric vehicle.

2. The system according to the claim 1, wherein the charging device 12 comprises a portable charger for making an electric connection between a power supplying means 17 for supplying from an electric power source 18 and the electric vehicle 19, and the power supplying means 17 has a unique identification code 171 identified with the mobile device 11 or the charging device 12.

3. The system according to claim 1, the system further comprises a fee paying server 31, the charging information comprises a charging location and a charging station, a charging information data is generated by the paying application 20 according to the charging location and the charging station to transmit to the managing server 13, and the fee paying server 31 determines each portion of the charging fee according to the charging information data.

4. The system according to the claim 1, the managing server 13 comprises a charging/running information database 66 for storing a data related to a charging information or a running information of each electric vehicle, at a least of a portion of the data stored in the charging/running information database 66 can be provided to a data utilizing server 67 under a condition of paying at a least of a portion of the total charging fee.

5. A method for utilizing a charging information, comprising;
storing a charging location or a charging station for an electric vehicle in a managing server;
detecting the electric vehicle to charging at the location or the station by an paying application installed at a mobile device, and delivering an information related to a charging state to the managing server using the mobile device;
verifying the information in the managing server;
verifying whether at least a portion of a charging fee is to be paid by a predetermined paying server;
detecting a charging completion, and generating a charging information data; transmitting the charging information data to the predetermined paying server and a server to utilize the charging information; and
determining each paying portion of the paying server and the server to utilize the charging information.
